# EUROPEAN PATENT SPECIFICATION

(11) **EP 1 338 396 B1**
(45) Date of publication and mention of the grant of the patent: **21.03.2007**
(21) Application number: 03075549.0
(22) Date of filing: 24.02.2003
(51) Int. Cl.: B29C 44/16, B29C 44/12

(54) **Method of manufacturing a composite structure**
Verfahren zur Herstellung einer Verbundstruktur
Procédé de fabrication d'une structure composite

(30) Priority: 22.02.2002 ES 200200440
(43) Date of publication of application: 27.08.2003
(73) Proprietor: Gamesa Desarrollos Aeronauticos, S.A. (Sociedad Unipersonal), 01510 Minano (Alava) (ES)
(72) Inventor: Valor Rafael, Xabier Gamesa Desarrollos, 01510 Minano (Alava) (ES); Siso Nadal, Rafael Gamesa Desarrollos, 01510 Minano (Alava) (ES); Ferreras Ruiz, Jose Antonio Gamesa Desarrollos, 01510 Minano (Alava) (ES)

(56) References cited:
- WO-A-90/14383
- DE-A- 1 922 054
- US-A- 5 173 227

## Description

### Summary.

As its name implies, this invention refers to a manufacturing procedure for a structure made of composite material whose interior is made up of a foam core. In order to achieve this new structure a fine foamy adhesive film is applied between rigid foam core and composite plies. Then the whole part formed like this is placed inside a mould and cured by a heater. It is during the curing process where the first advantage is obtained, as there is no requirement for vacuum bagging part to be cured, nor the need to use autoclave for curing it. Curing process is carried out in only one mould using heat action, and adhesive expansion improves compaction of plies against core and against mould walls.

This kind of structure can be very useful in forming aircraft interiors like frames or similar elements as a structure with all its usable faces correctly formed is achieved.

### Background of the invention.

The use of materials like titanium or similar metals for structural members has associated high cost and weight disadvantages, and that is why composite materials are used. Existing references about constitution of composite elements that include cores of foamy materials inside are countless; therefore a more detailed analysis is made referring to manufacturing procedures for prior mentioned structures.

In US 4.695.501 patent ("Thermo conformable composite laminar article"), for instance, a thermo conformable foam core with adhesive layers that join it to overlapped plies is claimed, at least one of the layers being a non-fabric impregnated with resin. The main component of this patent is the general constitution, together with the possibility of having its core divided into two pieces. It neither affects its form, nor procedure used in the scope of this invention, and it does not use an expanding adhesive. EP 730.951 patent ("Composite sheet") presents a sheet constituted by a composite layer reinforced with fiber, one foamy adhesive layer and one more layer usually metallic. However, compare to a sheet with one usable face, as opposed to a frame with four usable faces, and, secondly, foamy adhesive used does not have expanding properties unlike the one presented in this invention. WO 96/07534 patent ("Co-curing method in two phases for a composite material item manufacture") presents important differences. Cure is carried out in two phases, compare to the cure for the structure we are concerned with, which is made locating all elements together in only one mould. Outer cover is coated with an adhesive film, but this adhesive does not have expanding properties that help composite formation. EP 854.028 patent ("Procedure to manufacture a hollow body of a fiber material impregnated in resin") requires only one mould where foam and fiber material are put in and heat is applied. Differences come from adhesive, which is not used in this case, and from the fact that in previous patent the core is broken down due to heat forming a hollow body.
In WO90/14383 patent, a manufacturing method based in the use of an expanding, foaming adhesive for composite structures including fabric and core is described. According to it, adhesive is applied all over the core substructure, and the prepreg layers are not continuous around the core, being divided into top and bottom halve.

This composite structure manufacturing procedure has been developed in order to solve effectively the deficiencies that different patented procedures have presented.

### Description of the invention.

One object of the invention is to use a composite material of minimum weight in combination with maximum resistance and stiffness. This composite material is made up of fabric or tape plies pre-impregnated in a thermosetting resin and overlapped making up a peripheral frame of predominantly rectangular constitution and covering a rigid foam core. These fabric or tape plies pre-impregnated in a thermosetting resin are also known as pre-preg.

Reducing complexity of molding sets by using only one carbon mould, not requiring vacuum inside the mould for curing and not requiring autoclave either is also an object of this invention. Fabric or tape plies, pre-impregnated in a thermosetting resin, are distributed inside mould extending edges out of it. Expanding adhesive is added and rigid foam core is placed. Edges of protruding plies are located on top of core bordering it before closing mould. Once process has been completed, cure is carried out using a heater. Using internal pressure, instead of using external pressure like in an autoclave, composite is constructed.

Reducing total time and manual labor required for manufacturing cycle is another object. In order to achieve it, an expanding adhesive that helps structure formation and constitution has been used, and expensive and complicated procedures that required mould interior depressurization have been avoided. Expanding adhesive action compacts plies when squeezing them against foam core and against mould.

In order to make explanation easier one set of drawings has been attached, in which an embodiment is represented.

### Brief description of the drawings.

Figure 1 is a perspective view of the composite structure made by the here-in described procedure.
Figure 2 is a view that shows lower mould with initial disposition of plies and making up structure elements.
Figure 3 represents a view that shows complete mould interior once it has been closed and curing process has been initiated.

### Description of the preferred embodiments of the invention.

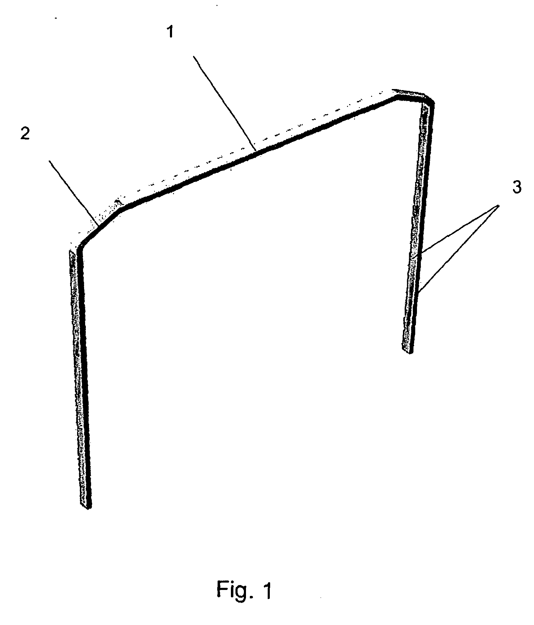

As shown on figure 1, the frame obtained by this procedure has a general shape of an inverted "U", with most of its sections straight (1) and some of them curved (2). This frame is part of the structure used in aircraft interiors and, more specifically, in the Sikorsky S-92 helicopter interior. The constitutive peripheral framework of this frame presents all its faces perfectly conformed and even (3).

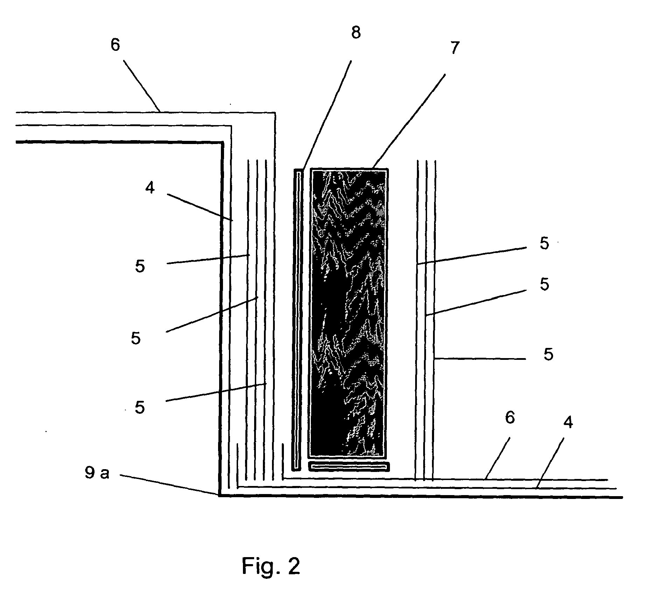

More in detail, as shown on figure 2, structure interior is made up of several pre-preg layers, outer layers (4) being placed as a wrapper on the intermediate layers (5) smaller than outer ones (4). Inner layers (6) are also larger than intermediate layers (5) and extend wrapping foamy core (7) and adhesive layer (8) placed on walls of mentioned core (7). Giving maximum resistance and stiffness to composite material is another object of this invention achieved by an appropriate orientation of structure constitutive layers. This way, outer (4) and inner (6) layers are made up of fabric layers that provide give good properties to the material in longitudinal and transverse direction. Intermediate layers (5), smaller than previous ones, are made up of tape layers that place their directionable filaments in order to support the required forces correctly.

The method followed during this procedure is according to claim 1. An auxiliary operation is according to claim 2.

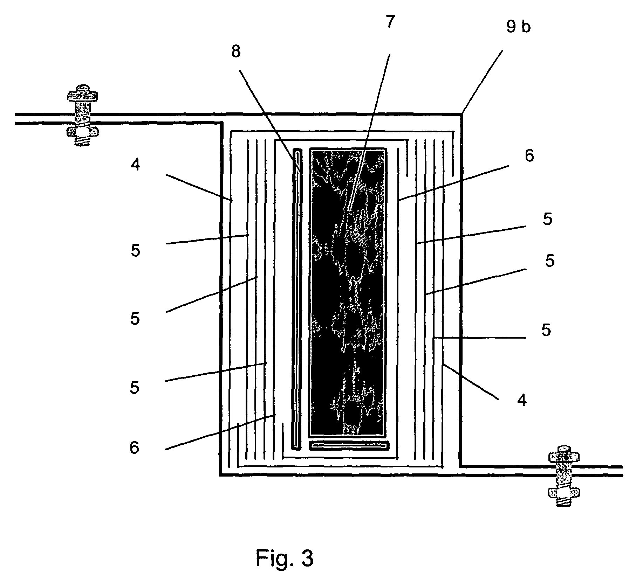

Figure 3 shows mould (9) already closed to which an external heat source is applied. Inside it adhesive (8) expands pressing adjacent layers and those placed on the side opposite to foamy core (7). Core Splice MA562SFR adhesive (8) (trade mark registered by SIA SOVEREING SPECIALTY CHEMICALS INC) and Rohacell foamy core (7) (trade mark registered by RÖHM) are preferably used for this invention. Structure compaction is achieved with the combination between external pressure made by mould (9) and internal pressure made by adhesive (8).

In a second embodiment several pieces of stiffening material are attached to inner core (7) and to part corresponding side opposite to adhesive (8) in order to provide certain hardness to parts, which will be submitted to specific requirements later on.

## Claims

1. Manufacturing procedure for a composite structure made up of a plurality of overlapped fabric and tape plies pre-impregnated in a thermosetting resin that incorporates a core of rigid foam on which a layer of foamable adhesive is laid up comprising a curing process where compaction is caused by the foaming adhesive layer (8) applied only to the two faces of the rigid foam core (7), **characterized by** a sequence of operations in which,
firstly the outer layers (4) are laid up on the surface of the lower mould half (9a) leaving their edges extended,
secondly intermediate tape layers (5) are placed,
thirdly inner fabric layers (6) are laid-up with their edges extended in the same way as the outer layers (4),
the foaming adhesive layers (8) are applied between the rigid foam core (7) and the inner layers (6)
the rigid foam core (7) and the foaming adhesive layers (8) are wrapped with the extended edges of inner fabric layer (6) and
the previously placed outer fabric layers (4) are wrapped around the rigid foam core (7), the foaming adhesive layers (8), the inner fabric layer (6) and the intermediate tape layers (5),
mould half (9b) is placed closing the complete structure together with mould (9a) and an external heat source is applied to the closed mould.

2. - Manufacturing procedure for a composite structure, according to claim 1, **characterized by** a lay-up of the composite material combining layers of fabric and tape in such a way that the fabric layers (4) and (6) wrap around the stiff foam core (7), the foaming adhesive (8) and the tape layers (5), which are distributed along the longest wall of the cross-section and are compacted during auxiliary operations carried out before mould (9b) is closed against mould (9a).

## Patentansprüche

1. Herstellungsverfahren einer Verbundwerkstoffstruktur, die aus einer Vielzahl von überlappenden gewebe- bzw. bandförmigen, in wärmehärtender Matrix getränkten Fasern (Prepregs) besteht und einen Schaumstoffkern umschließt, auf den eine Schicht verschäumbaren Klebstoffs aufgetragen wird. Das Verfahren beinhaltet einen Aushärtevorgang, wobei die Verfestigung durch die verschäumbare Klebstoffschicht (8) erfolgt, welche nur auf zwei Seiten des Schaumstoffkerns (7) aufgetragen wird. **Weitere charakteristische Vorgänge** dieses Verfahrens sind:
zuerst werden die äußeren Schichten (4) auf die Oberfläche der unteren Formhälfte (9a) aufgebracht. Die Fasern reichen über die Form hinaus.
Danach werden bandförmige Zwischenschichten (5) aufgetragen;
im dritten Schritt werden innere gewebeförmige Schichten (6) aufgetragen, deren Fasern gleicher Richtung wie die der äußeren Schichten (4) liegen.
Die verschäumbaren Klebstoffschichten (8) werden dann zwischen dem Schaumstoffkern (7) und den inneren Schichten (6) aufgetragen
und die überstehenden Teile der inneren Gewebeschicht (6) umhüllen den Schaumstoff-Kern (7) und die Klebstoffschichten (8).
Die äußeren Gewebeschichten (4) werden um den Schaumstoffkern (7), die Klebstoffschichten (8), die inneren Gewebeschichten (6) sowie um die bandförmigen Zwischenschichten (5) gelegt.
Die gesamte Struktur wird durch die beiden Formhälften (9a und 9b) eingeschlossen. Die geschlossene Form wird mittels einer externen Wärmequelle erhitzt.

2. Herstellungsverfahren einer Verbundwerkstoffstruktur, gemäß Patentanspruch 1, wobei Schichten des Verbundwerkstoffs, bestehend aus gewebeförmigen und bandförmigen Fasern, so angeordnet sind, dass die äußeren Gewebeschichten (4) und die inneren Gewebeschichten (6) den steifen Schaumstoffkern (7), den verschäumbaren Klebstoff (8) sowie die bandförmigen Zwischenschichten (5) umhüllen. Die Schichten sind auf der längsten Querschnittsschnittsseite verteilt und sie werden in zusätzlichen Vorgängen vor dem Schließen der oberen Formhälfte (9b) mit der unteren Formhälfte (9a) verfestigt.

## Revendications

1. La procédure de fabrication d'une structure composite composée de plusieurs plis en tissu et bande préimprégnés d'une résine thermodurcissable, qui incorpore un noyau en mousse rigide sur lequel une couche d'adhésif en mousse est disposé et, comprend un processus de cuisson au cours duquel la compression est provoquée par la couche en adhésive en mousse (8) qui ne s'applique qu'aux deux côtés du noyau en mousse rigide (7), est **caractérisée par** la séquence d'opérations suivante :
Tout d'abord, les couches externes (4) sont positionnées sur la surface de la partie inférieure du moule (9a), extrémités libres,
Ensuite, des plis en bande intermédiaires (5) sont mis en place,
Des couches internes de tissus (6) sont alors disposées, extrémités étendues comme celles des couches externes (4),
Les couches d'adhésif en mousse (8) sont alors appliquées entre le noyau en mousse rigide (7) et les couches internes (6)
Le noyau en mousse rigide (7) et les couches d'adhésif en mousse (8) sont recouverts par les extrémités des couches internes en tissu (6) et,
Les couches externes en tissu précédemment mises en place (4) enveloppe le noyau en mousse rigide (7), les couches d'adhésif en mousse (8), la couche interne en tissu (6) et les couches en bande intermédiaires (5),
L'autre partie du moule (9b) est mise en place afin de refermer la structure avec le moule (9a) et, un dispositif de chauffage externe est appliqué au moule refermé.

2. La procédure de fabrication d'une structure composite suivant la revendication 1, se **caractérise par** une superposition de matériaux composites combiné avec des couches en tissu et en bandes de telle sorte que les couches en tissu (4) et (6) enveloppent le corps en mousse durci (7), l'adhésif en mousse (8) et les couches en bande (5) qui se trouvent le long des plus longues parois de la section transversale sont compressés durant des opérations secondaire complémentaires qui ont lieux avant la fermeture du moule (9b sur 9a).
